Europäisches Patentamt

(19) European Patent Office

Office européen des brevets

(11) Publication number: **0 185 296**
**B1**

(12) EUROPEAN PATENT SPECIFICATION

(45) Date of publication of patent specification: **07.12.88**

(51) Int. Cl.⁴: **B 29 C 39/08,** B 29 C 37/00, B 29 C 67/18, G 01 L 1/20

(21) Application number: **85115721.4**

(22) Date of filing: **10.12.85**

(54) Method and apparatus for manufacturing a sandwichtype product.

(30) Priority: **10.12.84 DE 3444996**
**10.12.84 EP 84115029**

(43) Date of publication of application:
**25.06.86 Bulletin 86/26**

(45) Publication of the grant of the patent:
**07.12.88 Bulletin 88/49**

(84) Designated Contracting States:
**BE CH DE FR GB LI**

(56) References cited:
**FR-A-2 093 260**
**FR-A-2 126 695**
**GB-A-1 347 586**
**GB-A-2 024 697**
**US-A-2 847 707**
**US-A-3 410 135**

(73) Proprietor: **Pfister GmbH**
**Stätzlinger Strasse 70**
**D-8900 Augsburg (DE)**

(72) Inventor: **Häfner, Hans W.**
**Fichtenweg 15**
**D-8890 Aichach-Walchshofen (DE)**
Inventor: **Bock, Günther**
**Augsburger Strasse**
**D-8904 Friedberg (DE)**

(74) Representative: **Kahler, Kurt, Dipl.-Ing.**
**Postfach 248 Gerberstrasse 3**
**D-8948 Mindelheim (DE)**

## Description

The invention relates to a method and apparatus for manufacturing a sandwich-type product according to the preamble of claim 1 and claim 6, respectively.

When forming bodies of synthetic material in numerous cases it is important that such bodies are completely free of gaseous bubbles or other impurities. When fabricating such synthetic bodies in general two or several components are thoroughly mixed by stirring or the like in order to ensure a most uniform hardening process. The stirring inherently causes air to be included into the mixture. Furthermore, when filling the mixture into mould air bubbles are enclosed by the material.

In order to remove such bubbles it has become known to subject the mixture to a high vacuum for a predetermined relatively long time period. Consequently, a complex mechanical system is required despite of which the result is still unsatifactory.

The DE—A1—25 37 262, which is acknowledged in the preamble of the claims 1 and 6, discloses a rotational casting apparatus including at least one mould pivotally mounted at the end of a horizontal beam for rotation about a vertical axis. During rotation an opening provided in the upper region of the mould tightly engages an exit of a chamber concentrically arranged about the axis of rotation which chamber is supplied during rotation with synthetic material kept in fluid form by heating. Due to the centrifugal force the synthetic material is fed to the mould in which parts to be embedded may be arranged. The known apparatus is rather complicated in construction since the synthetic material must be fed to the chamber and to the mould whilst rotating. The interior upper face surface of the mould is plane and the mould during rotation maintains a position where its longitudinal axis intersects the horizontal at an oblique angle. Thus, the mould will be filled from top down which means that the air contained in the mould and any air bubbles enclosed in the material may remain in a lower corner of the mould deteriorating the purity of the final product. Furthermore, not any desired mould may be used since a very specific connection is necessary between the mould and the concentric chamber.

In DE—A1—27 27 536 a method of producing cast parts from thermoplastic synthetic materials is disclosed where the molten material is produced separately from the casting apparatus and the molten mass is accumulated in an appropriate amount in open heated vessel. A preheated mould is provided with an opening fitting to the open vessel. The mould and the vessel are brought into contact to each other and the combined device is tilted by 90° and attached to a rotational disk. During rotation of this rotational disk the molten synthetic material is pressed from the vessel into the mould by the centrifugal force. Again, this procedure is relatively complicated.

The moulds must be of specific design in respect of the inlet opening and specific vessels are necessary fitting to this opening. In view of the high centrifugal forces the combination of the mould and the vessel must be fastened on the rotational disk very strongly which requires separate operational steps. Since the vessel is rotated together with the mould the apparatus is excessively loaded. In view of the square-like interior of the mould air contained in the mould and air bubbles enclosed in the material will not be removed from the mould.

The US—A—3,104,135 discloses a force measuring device where at the bottom of a pot-like base member an elastomeric block is arranged having a slightly raised peripheral lip. A force introduction piston having a remarkably smaller diameter than the cylindrical interior of the base member fits with its lower face edge into the recess formed by the raised lip. The gap between the peripheral surface of the piston and the cylindrical inner surface of the base member is relatively large and of such a width that upon application of a force no elastomeric material is squeezed out of the base member by the piston. In view of the relatively large gap the piston may assume a certain oblique position with respect to the cylindrical interior of the base member without engaging the surface of the latter. In order to limit such an oblique position of the piston a resilient washer may be provided in the upper region of the annular gap between the piston and the interior surface of the base member. There is no connection between the elastomeric material and the metallic surfaces of the base member and the piston in contact with the elastic material. Without the washer considerable lateral forces will be transmitted to the elastomeric material and cause misreadings of the force measured. With the washer provided a new member of friction is introduced which in turn deteriorates the measuring results. Since the annular gap is relatively wide elastomeric material will be pressed into it at least upon application of large forces which give rise to further inaccuracies of the measurement.

It is an object of the present invention to provide a method and an apparatus for producing sandwich-type products where the synthetic material enclosed between a first and second part is made essentially bubble-free and well-linked.

This object is achieved by a method using the features of claim 1 and an apparatus using the features of claim 6.

These and other objects of the invention are achieved by the methods and apparatuses as defined in the appended claims.

The method according to the invention may be used in great variety since the essential parameters, i.e. the acceleration (a multiple of "g" which means the acceleration due to gravity) and the time may be varied over a broad range in a simple manner. Furthermore, these parameters may be determined by a few test runs within a short time. It has been observed that in view of the high acceleration, the centrifugal forces acting in the material are extremely large such that the air bubbles which have a considerably lower density than the synthetic material are squeezed out of the material in a very short time and in a direction opposite to that of the exerted force of acceleration. A person skilled in the art is readily in a position to apply the method according to the invention on any synthetic material and depending on the density and viscosity thereof to select the parameters m×g (multiple of acceleration of gravity) and time for a selected material by a few test runs.

In view of the fact that the mould is pivotally mounted at the beam of the carousel-like apparatus the force exerted onto the elastomeric material is at any time in direction of the longitudinal axis of the mould independent of the rotational speed; no specific vessels for filling the moulds and no filling chamber rotating with the moulds are necessary with the apparatus of the invention. The force measuring device produced by a method according to the invention has an extremely simple design and excellent operating parameters as will be explained below.

Brief description of the drawings

Fig. 1 shows a schematic diagram of an embodiment of an apparatus according to the invention;

Fig. 2 is a side view partially in section illustrating a force measuring device produced with an apparatus according to Fig. 1;

Fig. 3 is a top view of the force measuring device of Fig. 2; and

Fig. 4 is a side view partially in section of a second embodiment of a force measuring device produced in accordance with the method of the invention.

Description of preferred embodiments

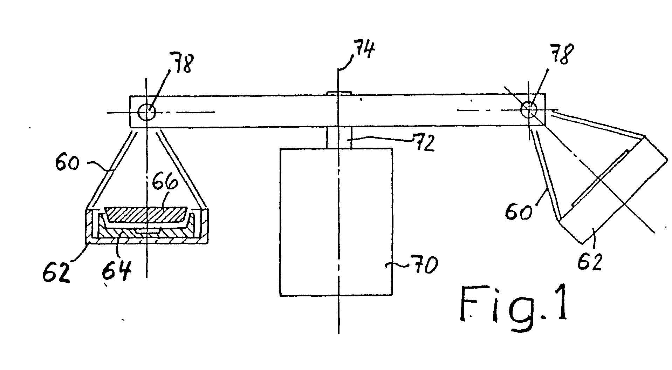

Fig. 1 is a side-view of an exemplary embodiment of the apparatus according to the invention showing to the left the apparatus in rest position and to the right in operating position.

It should be noted that for implementing the procedure according to the invention various apparatuses could be used adapted to apply a sufficient acceleration for sufficient time to the synthetic material. Accordingly, the apparatus according to Fig. 1 is an exemplary preferred design just shown in principle.

Fig. 1 shows a motor 70 which is adapted to rotate its shaft 72 about a vertical axis 74. For the present embodiment the shaft 72 supports at a central position a horizontal beam 76. In principle a one-arm-arrangement would be sufficient or for mass production a carrousel type of apparatus having a plurality of starlike arranged beams may be used. At the ends of the beam 76 support members 62 are fixed at pivotal points 78 by means of wires, cords or rigid connection bars like an apothecaries' scale. The support members 62 may comprise moulds for one or several of the synthetic bodies to be fabricated or may consists of a plate for putting one or several moulds 64 onto it which are filled with the synthetic resin.

Upon energisation of the motor 70 the rotation of its shaft 72 causes the support members 62 to pivot from the rest position shown on the left hand side of Fig. 1 into a position exemplary shown on right hand side of Fig. 1. With increasing rotational speed the support members 62 are lifted more and more in view of the resultant of gravitation and centrifugal force.

Preferably, this centrifugal procedure is initiated soon after mixing of the two or several components of the synthetic material together and filling the mixture into the mould. Thus, the mixture is more or less in liquid form and the pressure created in the mixture presses the essentially lighter air bubbles out of the synthetic material and the mould.

Dependent on the material and the progress of the hardening accelerations of a multiple of g (acceleration due to gravity) up to 100 may be applied to the material. The desired accelerations may be calculated on the basis of the rotational speed and the dimensions of the beam 76 and the cords 60. Alternatively the angular position of the support members 62 in respect of the horizontal direction at predetermined rotational speeds in test runs may be used for determining the acceleration.

As mentioned before the duration of the centrifugal process may be determined by means of simple test runs.

The effect of the centrifugal process may be improved by covering the mould 64 or the moulds on the support member 62 by placing a top member onto the material which essentially covers the material whilst air bubbles may be pressed out through a gap consisting between the rim of the mould and the peripheral edge of the top member 66.

With the apparatus according to this embodiment a force measuring device may be fabricated including a base member 64 provided with an upward projecting rim. The synthetic material to be hardened is exemplary silicon-rubber, RTV—ME 6 25 of Wacker Chemie AG München (FRG). After pouring the mixture consisting of the base material and a hardening agent into the base part 64 acting as the bottom mould part, the top plate 66 is inserted which leaves a gap between the rim of the base part 64 and the peripheral surface of the top part 66. With an acceleration between 30 and 60×g all air bubbles are pressed out of the elastomeric material in a very short time between several seconds and one minute.

If a mould is used which is essentially closed it will be preferable to provide an air escape opening. Alternatively the most upper layer of the material may be removed for instance cut away or ground away which layer will include all air bubbles in case the air is not completely accumulated above the synthetic material.

It should be noted that with such a centrifugal process also other particles having a density different from that of the synthetic material may be removed such that the resulting body will be extremely pure and uniform. Heavier particles would be forced to the bottom of the mould and can be removed there by removing the bottom layer of the body.

After the centrifugal process the material may complete hardening in rest in case the hardening is not yet completed during the centrifugal process. It should be noted, that the hardening may be enhanced by putting the moulds with the reacting mixture into an oven for applying an increased temperature. In addition, during rotation heating could be applied to the mould(s) if desired as explained in DE—A1—25 37 262.

A specific preferred embodiment of an article of use which might be produced by the above described method according to the invention is a force measuring device comprising, in principal, a base member, an upper force introduction member and a pressure sensor embedded in elastomeric synthetic material arranged between the base member and the force introduction member. Such types of forces measuring devices have been disclosed in US—A—3,410,135.

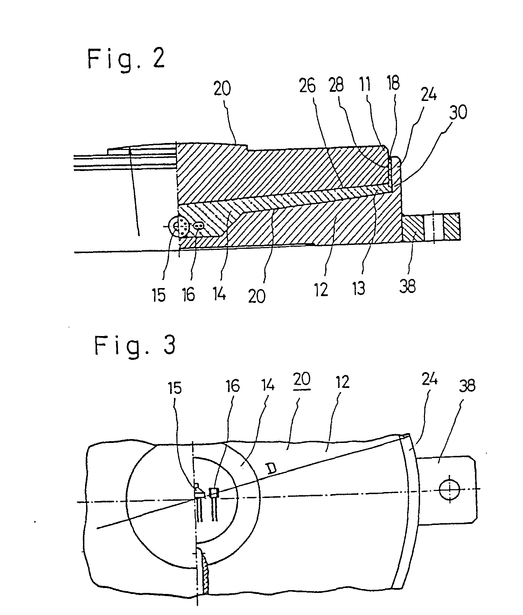

A practical embodiment of a force measuring device manufactured according to the method of the invention is shown in Figures 2 and 3. Between an upper member 11 and a base member 12 there is provided elastomeric material 13 into which a pressure transducer or sensor 15 and associated resistors 16 for temperature compensation are embedded. By means of a flange 38 the base member 12 may be secured to a base or support (not shown) whilst the force is exerted to the upper surface of the upper member 11 which may be provided with a spherical region 21.

According to this embodiment the region formed between the two opposing inner surface of the members 11 and 12 has a more specific form. In particular, the lower surface 26 of the upper member 11 has a slightly convex or conical shape. The upper surface 20 of the base member 12 may be formed convex resulting in a flat cup-like form. A broadened recessed central region 14 serves for the arrangement of the prsssure sensor 15 and the compensation resistors 16. Furthermore, the base member 12 is provided with an upwardly extending peripheral rim 24 for insertion of the upper plate 11. The dimensions are such that between the outer peripheral surface 28 of the upper member 11 and the cylindrical inner surface 30 of the rim 24, there is only a very narrow circular gap 18 which in accordance with the dimensions of the embodiment shown in Figures 2 and 3 is in the order of .1 to 2 mm preferable in the region between .2 and 1 mm. The narrow gap width has the advantage that the force measuring device has a high rigidity resulting in a rapidly dampening of oscillations. Also, the temperature sensitivity is reduced.

For optimizing the operation of the force measuring device, according to the invention, the height of the gap 18 may be of importance. This gap height should not be too small since via the two opposing surfaces 28 and 30 often considerable lateral forces will have to be transmitted.

By optimizing the gap 18 the influence of the temperature dependent spring characteristic of the silicone rubber may be minimized by a simultaneous reduction of measurement deflection which may be in the order of .01 mm. Also, a high stability against lateral forces is achieved.

By designing the upper member 11 in the form of a swimming body the effect of self alignment upon a symmetric loading is enhanced. With a force measuring device having dimensions as shown in Figure 2, the height of the gap 18 may be in the order of 10 to 30 mm, preferably between 15 and 20 mm. The dimensions of the members 11 and 12 and the interspace between them filled with the elastomeric material are considered to be the dimensions of a preferred embodiment and these dimensions are made part of the description whilst deviations from these dimensions are in the option of a person skilled in the art.

With the embodiment according to Figures 2 and 3 as a pressure sensor an absolute pressure sensor is used, for instance the absolute pressure sensor KPY 14 manufactured by Siemens AG, Munich (FRG). The absolute pressure sensor 15 is embedded in the elastomeric material 13 in such a manner that there is no essential contact of the absolute pressure sensor 15 to either of the plates 11 and 12. This results in a uniform pressure distribution and a good protection of the absolute pressure sensor, the compensation resistors and the cable against environmental influences in particular against penetration of gases and humidity. Thus, such a force measuring device may be used in an underwater environment.

As elastomeric materials 13 natural or synthetic materials may be used with a shore hardness in the range between 30 and 70 preferably 40 and 60. As an example for an elastomeric material 13 the silicone-rubber RTV-ME 625 of Wacker-Chemie AG, Munich (FRG) may be used.

A height uniformity and incompressibility of the elastomeric material are achieved in that air and gas bubbles are removed from the elastomeric material before or during the hardening thereof by the procedure according to the invention.

In view of the cup-like form the base member 12 may be used as the mould for the elastomeric material which considerably simplifies the production of the force measuring devices. First, the two (or more) reactant components of the elastomeric material are mixed by stirring in a well-known manner and a proper quantity of the mixture is poured into the base member 12 upon having arranged the pressure sensor 15 and the compensation resistors 16 in the latter. The base member is now placed onto the apparatus of Fig. 1 and rotated with a predetermined rotational speed for a predetermined time. The rotational speed and the time may be selected such that all air or gas bubbles are squeezed out of the reaction mixture. The two parameters will further depend on the type of elastomeric material used and at what a time after initiating hardening of the mixture has elapsed; a typical rational feed might be in the order of 50 to 500 rpm, preferably between 150 and 400 rpm. The time period may vary between several seconds and several minutes, preferably in the range about one minute.

Although such a centrifugal process may be accomplished without placing the upper member 11 onto the base member 12 such a measure supports the pressure onto the elastic material resulting in a faster removal of air or gas bubbles which removal is further enhanced by the above mentioned convex shape of the lower surface of the upper member 11. Furthermore, with the upper member 11 in inserted position the force measuring device is already completed in its final form with the hardening mixture of the elastomeric material completely filling the gap between the upper member 11 and the base member 12.

An improved force measuring cell results from wetting all parts of the upper member and the base member coming into contact with the elastomeric material with an agent containing in a solvent, for instance aceton or toluene, silanes or silicon resines. Such a primer, exemplary primer G 790 manufactured by Wacker-Chemie GmbH Munich (FRG) ensures that the elastomeric material fixed adheres to the metallic surfaces of the upper member and the base member. As result, there is no danger of penetration of humidity or dirt and lateral forces acting on the upper one transferred to the base member through the elastomeric material in the gap without friction.

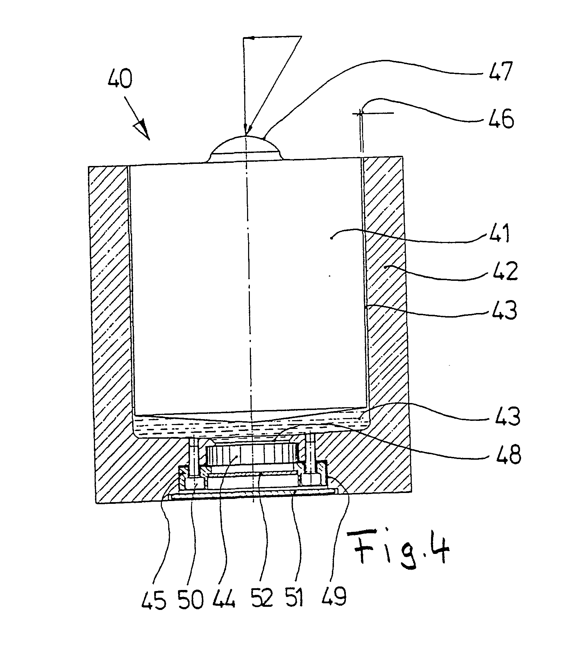

Fig. 4 shows a further embodiment of a force measuring device preferably produced by using the method according to the invention. In Fig. 4 load cell 40 includes a pot-like base member 42 having a relatively high cylindric side wall. In the interior of the base member 42 a force introduction member specifically a force transmission piston 41 is provided at the upper face of which a spheric section may be provided for force introduction. The lower face of the piston 41 may be formed slightly convex or conical for enhancing removal of air bubbles when applying the method according to the invention. Between the lower face of the piston 41 and bottom of the base member 42 elastomeric material 43 is shown which preferably is a silicon rubber, exemplary RTV—ME 6 25 of RTV—ME 6 22 manufactured by the Wacker-Chemie GmbH Munich (FRG). Alternatively, any other elastomeric material mentioned before may be used. Silicon rubbers are preferred in view of the their excellent temperature constancy in a range between —100°C bis +200°C. Furthermore they are resistant against ozone and light influence as well as against oils.

In the bottom wall of the base member 42 there is at least one opening preferably a central opening 48 into which a pressure sensor 44 may be inserted and fixed by means of a ring 45. Specifically, after inserting the pressure sensor 44 from below the ring 44 is placed into a recess 49 at the bottom face surface of the base member 42 and exemplary fixed by means of screws 50 at the bottom wall of the base member 42. Finally, a cover plate 51 is bonded or otherwise fixed at the bottom face surface for an air and humidity tight connection.

One of the salient features of the embodiment of Fig. 4 is the relatively narrow and extremely high gap 46 between the peripheral surface of the piston 41 and the interior surface of the base member 42. Preferably, this gap is in the range of .0,5 to 2 mm, preferably .1 to 1 mm whilst its height is in the range of the diameter of the piston 41.

Compared with the embodiment according to the Figures 2 and 3 the load cell 40 according to Fig. 4 is adapted for use in connection with forces which have considerable lateral components which with the embodiment according to Figures 2 and 3 will tend to tilt the upper member in an oblique position which might lead to the blocking of its movement in vertical direction or at least to considerable friction. Considering the load cell 40 according to Fig. 4 an oblique force acting upon piston 41 is divided in a force component acting in direction of the piston axis as a vertical component and into a force component acting perpendicularly to the vertical component as a lateral force component. The latter is bypassed through the elastomeric material 43 in the gap 46 and the base member 42 into the base support (not shown). The vertical component causes in the elastomeric material 43 below the lower face of the piston 41 a pressure proportional to the vertical component, which pressure is captured by the pressure sensor 44.

The high, narrow gap 46 has the further advantage of an increased rigidity in load direction (smaller .01 mm) and offers the use of load cells 40 for extreme loads in the range of 1000 tons and more and an interior pressure up to 500 bars. The load cells 40 have a very compact size. For producing load cells 40 according to the method of the invention first all metallic surfaces of the base member 42 and the piston 41 which will come into contact with the elastomeric material 43 will be treated with an adhering agent as explained in connection with the embodiment of Fig. 2 and 3 in order to ensure a definite connection of the elastomeric material 43, in particular in the gap 46, to the surfaces of the piston the base member 42.

The opening 48 in the bottom wall of the base member 42 may be disclosed by the inserted pressure sensor 44 or by a plate of similar size. As described before a mixture of two (or more) reactant components of the elastomeric material are mixed together and a proper amount of the mixture is poured into the interior of the base member 42. For removing all air bubbles the device is placed onto the apparatus of Fig. 1 and rotated for a time period which might even be below one minute with a rotational speed of exemplary 300 rpms assuming that the device is arranged at a distance from the rotational axis of about 500 mms. Upon stopping the apparatus piston 41 is inserted and there is a second centrifugal step similar to the first step removing the rest of air bubbles and having the elastomeric material 43 rising into the narrow gap 46 up to the upper edge of the base member 42. Such the gap 46 will be completely filled with the elastomeric material 43 which will fixed adhere to the surfaces of the piston 41 and the base member 42 due to the primer treatment mentioned before.

Alternatively, the two step procedure may be replaced by a one step procedure by inserting the piston 41 immediately after pouring the mixture into the interior of the base member 42. Thus, only one centrifugal step is necessary. After this one centrifugal step or after the second step the device is maintained in rest for completing hardening (provided that the hardening has not yet been finished during the centrifugal step (s)).

Now, if the pressure sensor 44 was not placed into the opening 48 at the beginning of the process, the plate closing this opening is removed and a pressure sensor 44 is inserted which has been calibrated and compensated separately from the load cell 40.

It should be noted, that this feature of a separately and replaceably attaching of the pressure sensor 44 to the load cell 40 is of considerable advantage since the pressure sensor 44 may be calibrated and compensated by corresponding compensating resistors separately and individually without using the load cell 40. Electrical parts necessary, in particular the compensating resistors may be applied to a board 52 arranged below the pressure sensor 44 or to the bottom face surface of the pressure sensor 44 by a conventional thick layer technique. Alternatively, an intelligent pressure sensor might be used having integrated calibration and compensation means. Obviously, the pressure sensor 44 is connected by a cable (not shown) to appropriate evaluation means well-known in the art.

## Claims

1. A method for manufacturing a sandwich-type product comprising a first pot-like part (64) and a second part (66) formed for loosely fitting into the interior of the first part (64) and synthetic material (13) provided between opposing surfaces of the first and second parts, e.g. a pressure-sensitive element characterized in that the first part (64) is used as a mould, that a mixture of reactant components of the synthetic material (13) is filled into the first part (64), that the second part (66) is inserted into the first part (64) and that the mould is orbited about a vertical axis (74) for a time sufficient to have gas bubbles centrifuged out of the synthetic material.

2. The method claim 1, characterized in that the synthetic material (13) is silicon rubber, natural rubber, styrene rubber, butadyene rubber, polysulfid rubber, polyacrylate polyurethan or a mixture of any of these materials.

3. The method of claim 1 or 2, characterized in that before inserting the second part (66) into the first part (64) the mixture is centrifuged by orbiting the first part for a predetermined time.

4. The method of any preceding claim, characterized in that those metallic surfaces of the first (64) and second (66) parts coming into contact with said synthetic material (13) are treated for adhering to said synthetic material (13).

5. The method of any preceding claim, characterized in that before filling-in of the mixture at least one element, e.g. a pressure-sensitive element (15) is arranged in the first part (64).

6. An apparatus for manufacturing a sandwich-type product in a carrousel-type rotating machine, such machine comprising a horizontally extending beam (76), secured at its centre to a drive shaft (72) of a drive means (70) for rotation about a vertical axis (74) and support means (62) suspended at opposite ends of the beam for mounting at least one first part (64), characterised in that the first part (64) is part of said sandwich-type product and used as a mould for the mixture of reactant components of the synthetic material (13) and that the second part (66) is located in the first part (64).

## Patentansprüche

1. Ein Verfahren zum Herstellen eines sandwichartigen Produkts, das ein erstes topfartiges Teil (64) und ein zweites Teil (66) aufweist, das für einen losen Sitz in dem Inneren des ersten Teils (64) geformt ist, und wobei Kunststoffmaterial (13) zwischen den gegenüberliegenden Flächen des ersten und zweiten Teils vorhanden ist, z.B. eines druckempfindlichen Elements, dadurch gekennzeichnet, daß das erste Teil (64) als Form verwendet wird, daß eine Mischung der Reaktionskomponenten des Kunststoffmaterials (13) in das erste Teil (64) gefüllt wird, daß das zweite Teil (66) in das erste Teil (64) eingesetzt wird, und daß die Form um eine vertikale Achse (74) für eine Zeit kreisen gelassen wird, die ausreicht, daß Blasen aus dem Kunststoffmaterial zentrifugiert werden.

2. Verfahren nach Anspruch 1, dadurch gekennzeichnet, daß das Kunststoffmaterial (13) Silikonkautschuk natürlicher Gummi, Styrolkautschuk, Butadienkautschuk, Polysulfidkautschuk, Poliacrylat, Poliuretan oder eine Mischung irgendwelcher dieser Materialien ist.

3. Verfahren nach Anspruch 1 oder 2, dadurch gekennzeichnet, daß vor dem Einsetzen des zweiten Teils (66) in das erste Teil (64) die Mischung unter Kreisenlassen des ersten Teils für eine vorbestimmte Zeitdauer zentrifugiert wird.

4. Verfahren nach irgendeinem vorhergehenden Anspruch, dadurch gekennzeichnet, daß diejenigen metallischen Flächen des ersten (64) und zweiten (66) Teils, die in Kontakt mit dem Kunststoffmaterials (13) kommen, für ein Anhaften des Kunststoffmaterials (13) behandelt werden.

5. Verfahren nach irgendeinem vorhergehenden Anspruch, dadurch gekennzeichnet, daß vor dem Einfüllen der Mischung zumindest ein Element, z.B. ein druckempfindliches Element (15), in dem ersten Teil (64) angeordnet wird.

6. Gerät zum Herstellen eines sandwichartigen Produkts in einer karussellartigen Rotationsmaschine, wobei eine derartige Maschine einen sich horizontal erstreckenden Balken (76), der an seiner Mitte mit einer Antriebswelle (72) einer Antriebsvorrichtung (70) zur Rotation um eine vertikale Achse (74) befestigt ist, und Haltevorrichtungen (62) aufweist, die an entgegengesetzten Enden des Balkens zum Anbringen mindestens eines ersten Teils (64) aufgehängt sind, dadurch gekennzeichnet, daß das erste Teil (64) Teil des sandwichartigen Produkts ist und als Form für die Mischung von Reaktionskomponenten des Kunststoffmaterials (13) verwendet wird, und daß das zweite Teil (66) in dem ersten Teil (64) angeordnet ist.

## Revendications

1. Un procédé de fabrication d'un produit de type-sandwich comprenant une première partie (64) en forme de pot et une seconde partie (66) profilée de manière à s'emboîter de façon lâche à l'intérieur de la première partie (64), et une matière synthétique (13) disposée entre des surfaces opposées de la première et de la seconde partie, par exemple un élément sensible à la pression, caractérisé en ce que la première partie (64) est utilisée comme un moule, en ce qu'un mélange de composants réactifs de la matière synthétique (13) est introduit dans la première partie (64), en ce que la seconde partie (66) est insérée dans la première partie (64) et en ce que le moule est déplacé en rotation autour d'un axe vertical (74) pendant un temps suffisant pour que des bulles de gaz soient éjectées de la matière synthétique par centrifugation.

2. Le procédé selon la revendication 1, caractérisé en ce que la matière synthétique (13) est un caoutchouc de silicone, du caoutchouc naturel, un caoutchouc de styrène, un caoutchouc de butadiène, un caoutchouc de polysulfure, du polyacrylate, du polyuréthane ou un mélange de plusieurs desdits matières.

3. Le procédé selon une des revendications 1 ou 2, caractérisé en ce que, avant l'insertion de la seconde partie (66) dans la première partie (64), le mélange est centrifugé en faisant tourner Ipa première partie pendant un temps prédéterminé.

4. Le procédé selon une quelconque des revendications précédentes, caractérisé en ce que les surfaces métalliques de la première (64) et de la seconde (66) partie entrant en contact avec ladite matière synthétique (13) sont traitées un vue d'adhérer sur ladite matière synthétique (13).

5. Le procédé selon une quelconque des revendications précédentes, caractérisé en ce que, avant le chargement du mélange, au moins un élément, par exemple un élément sensible à la pression (15), est disposé dans la première partie (64).

6. Un appareil de fabrication d'un produit de type-sandwich dans une machine rotative du type-carrousel, ladite machine comprenant une poutre (76) s'étendant horizontalement, fixée en son centre sur un arbre d'entraînement (72) d'un moyen d'entraînement (70) de manière à tourner autour d'un axe vertical (74) et des moyens porteurs (62) suspendus à des extrémités opposées de la poutre pour le montage au moins d'une première partie (64), caractérisé en ce que la première partie (64) fait partie dudit produit de type-sandwich et est utilisée comme un moule pour le mélange des composants réactifs de la matière synthétique (13) et en ce que la seconde partie (66) est placée dans la première partie (64).

Fig.1

Fig. 2

Fig. 3

Fig.4